# EUROPÄISCHE PATENTSCHRIFT

(11) **EP 2 377 708 B1**
(45) Veröffentlichungstag und Bekanntmachung des Hinweises auf die Patenterteilung: **08.06.2016**
(21) Anmeldenummer: 11162108.2
(22) Anmeldetag: 12.04.2011
(51) Int. Cl.: B60J 7/12

(54) **Soft-Top-Verdeck für ein Cabriolet-Fahrzeug**
Soft top for a convertible vehicle
Capote souple pour un cabriolet

(30) Priorität: 14.04.2010 DE 102010014921
(43) Veröffentlichungstag der Anmeldung: 19.10.2011
(73) Patentinhaber: Valmet Automotive Oy, 23500 Uusikaupunki (FI)
(72) Erfinder: Maaß, Joachim, 49143, Bissendorf (DE)
(74) Vertreter: Kronthaler, Wolfgang N.K.

(56) Entgegenhaltungen:
- DE-A1-102007 020 180
- DE-B3-102006 002 030
- US-A- 2 833 593
- US-A- 5 253 915

## Beschreibung

Die Erfindung betrifft ein Soft-Top-Verdeck für ein Cabriolet-Fahrzeug nach der im Oberbegriff des Patentanspruchs 1 und des Patentanspruches 2 näher definierten Art.

Aus der Praxis sind Soft-Top-Verdecke für Cabriolet-Fahrzeuge mit vielfältigen Verdeckmechanismen bekannt, mittels welcher sie zwischen einem geschlossenen Zustand und einem offenen Zustand überführbar sind. Konventionelle Soft-Top-Verdecke werden dabei häufig mittels einer Z-förmigen Faltung von dem geschlossenen Zustand in den offenen Zustand überführt, wobei eine Heckscheibe bei der Überführung gegenläufig zu Hauptsäulen bewegt wird und bei abgelegtem Verdeck das unterste Bauteil bildet.

Eine alternative Verdeckgestaltung ist in der DE 10 2007 020 180 A1 beschrieben. Hierbei ist eine starre, ein flaches kuppelartiges Modul bildende Bewegungseinheit bestehend aus Heckscheibe, Spannbügel, Eckspriegel und Hauptsäulen vorgesehen, welche mittels eines Viergelenks zwischen einer Position bei geschlossenem Verdeck und einer demgegenüber nach hinten unten verschwenkten Position bei offenem Verdeck verlagert wird. Der hintere Bereich des Verdecks kann dabei ähnlich dem eines Hard-Top-Verdecks ausgebildet werden.

Durch die starre Bewegungseinheit hat ein derartiges Verdeck den Nachteil, dass die einzelnen Bauteile der Bewegungseinheit bei einer Verdecköffnung nicht zueinander bewegt werden können und das Verdeck daher nur eingesetzt werden kann, wenn in einem heckseitigen Ablageraum genügend Platz für das Verdeck inklusive der Bewegungseinheit ist. Insbesondere zwischen den Hauptsäulen und einem Radkasten des Cabriolet-Fahrzeugs kann es bei einer Verdecköffnung zu Engstellen kommen.

Aus der US 2,833,593 A ist ein Verdeck bekannt, das eine in einen Rahmen eingebundene Heckscheibe aufweist. Bei einer Überführung des Verdecks zwischen einer geschlossenen und einer offenen Position verschwenken eine Hauptsäule und ein Spriegel gegenüber dem Rahmen und der Heckscheibe.

Es ist Aufgabe der vorliegenden Erfindung, ein Soft-Top-Verdeck für ein Cabriolet-Fahrzeug mit einem eine Heckscheibe, einen Stoffhaltebügel, einen Eckspriegel und Hauptsäulen umfassenden Bauelementekörper zu schaffen, welcher hinsichtlich seines Platzbedarfs in einem heckseitigen Ablageraum optimiert ist.

Diese Aufgabe wird mit einem Soft-Top-Verdeck für ein Cabriolet-Fahrzeug gemäß den Merkmalen des Patentanspruches 1 und des Patentanspruches 2 gelöst.

Vorteilhafte Weiterbildungen eines Soft-Top-Verdecks nach der Erfindung ergeben sich aus den Unteransprüchen.

Die Erfindung sieht ein Soft-Top-Verdeck für ein Cabriolet-Fahrzeug vor, welches zwischen einer einen Fahrgastraum überdeckenden, geschlossenen Position und einer den Fahrgastraum freigebenden, offenen Position verfahrbar ist, aufweisend einen wenigstens bereichsweise von einem flexiblen Verdeckbezug bezogenen Bauelementekörper, welcher als Bauelemente eine Heckscheibe, einen Stoffhaltebügel, einen Eckspriegel und Hauptsäulen umfasst, wobei die Orientierung der Bauelemente des Bauelementekörpers zueinander bei einer Überführung des Verdecks zwischen der geschlossenen Position und der offenen Position bestehen bleibt, wobei die Heckscheibe starr mit dem Stoffhaltebügel und starr mit dem Eckspriegel verbunden ist, und wobei eine aus wenigstens einem Bauelement des Bauelementekörpers bestehende Einheit bei einer Überführung des Verdecks zwischen der geschlossenen Position und der offenen Position gegenüber den anderen Bauelementen des Bauelementekörpers innerhalb von Bewegungsgrenzen, welche durch den Verdeckbezug vorgegeben sind, bewegbar ist. Erfindungsgemäß stellen die Hauptsäulen die Einheit dar.

Die Erfindung sieht weiterhin ein Soft-Top-Verdeck für ein Cabriolet-Fahrzeug vor, welches zwischen einer einen Fahrgastraum überdeckenden, geschlossenen Position und einer den Fahrgastraum freigebenden, offenen Position verfahrbar ist, aufweisend einen wenigstens bereichsweise von einem flexiblen Verdeckbezug bezogenen Bauelementekörper, welcher als Bauelemente eine Heckscheibe, einen Stoffhaltebügel, einen Eckspriegel und Hauptsäulen umfasst, wobei die Orientierung der Bauelemente des Bauelementekörpers zueinander bei einer Überführung des Verdecks zwischen der geschlossenen Position und der offenen Position bestehen bleibt, wobei die Heckscheibe starr mit dem Stoffhaltebügel verbunden ist, und wobei eine aus wenigstens einem Bauelement des Bauelementekörpers bestehende Einheit bei einer Überführung des Verdecks zwischen der geschlossenen Position und der offenen Position gegenüber den anderen Bauelementen des Bauelementekörpers innerhalb von Bewegungsgrenzen, welche durch den Verdeckbezug vorgegeben sind, bewegbar ist. Erfindungsgemäß stellen die Hauptsäulen und der Eckspriegel die Einheit dar, wobei die Hauptsäulen und der Eckspriegel starr miteinander verbunden sind.

Dadurch, dass bei der Ausführung des Soft-Top-Verdecks gemäß Patentanspruch 1 die Hauptsäule die bewegbare Einheit der Bauelemente darstellt, kann ein von den Bauelementen des Bauelementekörpers bei offenem Verdeck benötigter Stauraum auf einfache Weise reduziert werden, wenn die Hauptsäulen in den von dem Bauelementekörper bei geschlossenem Verdeck gebildeten Raum bewegt werden. Der von dem Verdeck in seiner Ablageposition benötigte Stauraum kann einfach auf die von einem Ablageraum vorgegebenen Rahmenbedingungen angepasst werden, so dass das erfindungsgemäße Verdeck auch bei einem beispielsweise durch einen Radkasten begrenzten Stauraum eingesetzt werden kann. Die Hauptsäule kann dabei gegenüber den anderen Bauelementen des Bauelementekörpers um beispielsweise 4 cm bis 5 cm angehoben werden.

Zur Bewegung der Hauptsäule gegenüber den anderen Bauelementen kann die Hauptsäule beispielsweise über einen mit einem Verdeckgestänge verbundenen und in einem vorderen oder hinteren Bereich der Hauptsäulen angeordneten Drehpunkt gegenüber den anderen Bauelementen verschwenkbar gelagert sein. Auch eine Bewegung der Hauptsäulen über eine Kulissenführung oder ein Viergelenk ist dabei auf einfache Weise umsetzbar.

Dadurch, dass bei der Ausführung des Soft-Top-Verdecks gemäß Patentanspruch 2 die Hauptsäule und der Eckspriegel zusammen eine starre, gegenüber den anderen Bauelementen bewegliche Einheit darstellen, kann eine von dem Bauelementekörper bei abgelegtem Verdeck eingenommene Gesamtlänge gegenüber einer Gesamtlänge des Bauelementekörpers bei geschlossenem Verdeck vorteilhafterweise reduziert werden, womit der Bauelementekörper in kürzeren heckseitigen Stauräumen untergebracht werden kann. Eine Bewegung der Einheit gegenüber den anderen Bauelementen kann dabei insbesondere durch einen Viergelenkmechanismus, beispielsweise ein Viergelenkscharnier realisiert werden.

Der Bauelementekörper gemäß der Erfindung wird begrenzt durch insbesondere gebogene, möglichst einfache Ebenen, welche durch die Heckscheibe, den Stoffhaltebügel und den Eckspriegel aufgespannt werden. Weiterhin wird der Bauelementekörper von einer Ebene begrenzt, in welcher die beiden Hauptsäulen liegen. Indem die Orientierung der Bauelemente des Bauelementekörpers zueinander bei einer Überführung des Verdecks zwischen der geschlossenen Position und der offenen Position bestehen bleibt, bleiben die durch die Heckscheibe, den Stoffhaltebügel, den Eckspriegel und die Hauptsäulen gebildeten Ebenen bezüglich des Bauelementekörpers bei einer Überführung des Verdecks zwischen seiner offenen Position und seiner geschlossenen Position erhalten, d. h., dass sowohl bei offenem Verdeck als auch bei geschlossenem Verdeck die gleiche Seite der jeweiligen Ebene dem Bauelementekörper zugewandt ist.

Der Bauelementekörper stellt somit ein bis zu einem gewissen Grad starres Modul dar, welches durch eine begrenzte Beweglichkeit der Bauelemente zueinander "gestaucht" werden kann.

Ein erfindungsgemäß ausgestaltetes Soft-Top-Verdeck hat den Vorteil, dass die Bauteilgruppe als kuppelartiges Gebilde in einen heckseitigen Ablageraum überführt werden kann und in diesem aufgrund ihrer Flexibilität den Bauraumverhältnissen angepasst abgelegt werden kann.

Der Bauelementekörper ist hierzu bezüglich seiner Größe, insbesondere seiner Bauhöhe, bei geschlossenem Verdeck vorzugsweise verkleinerbar, wobei eine Veränderung der Form des Bauelementekörpers durch eine bewegbare Lagerung wenigstens einer Einheit der Bauelemente gegenüber den anderen Bauelementen realisiert werden kann.

Durch den Einsatz eines erfindungsgemäßen Verdecks und den dabei reduzierten Bedarf an Ablageraum steht vorteilhafterweise auch ein vergrößertes Restvolumen zur anderweitigen Verwendung zur Verfügung.

Da sich bei einer Öffnungsbewegung bzw. einer Schließbewegung des Verdecks die Heckscheibe, der Stoffhaltebügel, der Eckspriegel und die Hauptsäulen in gleicher Weise bewegen und keine gegenläufige Bewegung der Bauteile stattfindet, kann eine Stofflänge des Verdeckbezugs u. a. im Bereich der Hauptsäulen sehr kurz ausgebildet sein, so dass eine gute Verdeckstofffaltung bei abgelegtem Verdeck ohne ein "Knautschen" des Verdeckstoffs insbesondere im Bereich der Hauptsäulen erfolgen kann.

Weiterhin kann die Stofflänge des Verdecks zwischen der Scheibe und dem Eckspriegel und gegebenenfalls zwischen der Scheibe und dem Stoffhaltebügel vorteilhafterweise sehr gering sein.

Ein weiterer Vorteil eines erfindungsgemäß ausgebildeten Verdecks liegt darin, dass die Heckscheibe deutlich größer als bei bekannten Verdecken ausgebildet sein kann, wodurch eine wesentlich bessere Sicht nach hinten bereitgestellt ist. Dieser Effekt wird durch die ebenfalls schlanker ausbildbaren Hauptsäulen weiter verstärkt.

In einer konstruktiv einfach ausgebildeten Ausgestaltung der Erfindung ist die bewegliche Einheit rotatorisch gegenüber den anderen Bauelementen bewegbar. Dies lässt sich auf einfache Weise durch eine in einem Drehpunkt gegenüber den anderen Bauelementen gelagerte Einheit realisieren.

In einer hierzu alternativen Ausgestaltung der Erfindung kann die Einheit translatorsich gegenüber den anderen Bauelementen bewegbar sein. Auf einfache Weise lässt sich dies beispielsweise über eine Lagerung der Einheit in einer Kulissenführung umsetzen.

Komplexere Bewegungen der Einheit und somit eine flexiblere Anpassung an räumliche Gegebenheiten können umgesetzt werden, wenn die Einheit durch eine kombinierte Bewegung aus rotatorischer und translatorischer Bewegung gegenüber den anderen Bauelementen bewegbar ist. Eine derartige Bewegung lässt sich auf einfache Weise beispielsweise mit einem Viergelenkmechanismus oder einer gebogenen Kulissenführung umsetzen.

Die Bewegung der Einheit gegenüber den anderen Bauelementen kann auf einfache konstruktive Weise dadurch umgesetzt werden, dass die Einheit bei einer Überführung des Verdecks zwischen seiner geschlossenen Position und seiner offenen Position durch eine Anbindung an ein Verdeckgestänge, beispielsweise durch eine als Zug-Druckstange ausgebildete Antriebsstange, zwangsgesteuert bzw. zwangsgeführt ist und somit bei einer Verdeckbewegung ohne einen zusätzlichen Antrieb umgesetzt wird. Die Antriebsstange kann dabei einen zusätzlichen Lenker des Verdeckgestänges darstellen. Bei Einsatz eines Viergelenkmechanismus zur Bewegung der Einheit kann die Antriebsstange entweder direkt mit der Einheit oder mit dem Viergelenkmechanismus zusammenwirken.

Eine genauere Steuerung des Bewegungsablaufs der Einheit gegenüber den anderen Elementen kann mittels eines separaten Antriebs zur Bewegung der Einheit erzielt werden, wobei dieser beispielsweise als hydraulischer oder elektrischer Antrieb ausgebildet sein kann. Der Antrieb kann dabei beispielsweise mittels eines Bowdenzugs mit der Einheit zusammenwirken.

Weitere Vorteile und vorteilhafte Ausführungen eines Verdecks für ein Cabriolet-Fahrzeug nach der Erfindung ergeben sich aus der Zeichnung und der Beschreibung.

Nachfolgend sind vorteilhafte Ausführungsbeispiele eines erfindungsgemäßen Verdecks anhand der Zeichnung prinzipmäßig beschrieben, wobei zugunsten der Übersichtlichkeit in der Beschreibung der Ausführungsbeispiele für bau- und fünktionsgleiche Bauteile dieselben Bezugszeichen verwendet werden.

Es zeigt:
- Fig. 1: eine vereinfachte dreidimensionale Ansicht eines Ausschnitts eines Cabriolet-Fahrzeugs mit einem ohne einen Verdeckbezug dargestellten Soft-Top-Verdeck, wobei das Soft-Top-Verdeck in einer einen Fahrgastraum überspannenden, geschlossenen Position gezeigt ist;
- Fig. 2: eine vereinfachte dreidimensionale Darstellung eines heckseitigen Bereichs des Verdecks der Fig. 1, wobei eine Heckscheibe, ein Stoffhaltebügel, ein Eckspriegel und die Hauptsäulen einen Bauelementekörper bilden;
- Fig. 3: eine vereinfachte Seitenansicht des Bauelementekörpers der Fig. 2, wobei die Hauptsäulen um einen verdeckfrontseitigen Drehpunkt gegenüber den weiteren Bauelementen des Bauelementekörpers verschwenkbar sind;
- Fig. 4: eine schematische Darstellung des in einem heckseitigen Ablageraum des Cabriolet-Fahrzeugs abgelegten Bauelementekörpers der Fig. 3 in einer Seitenansicht;
- Fig. 5: eine vereinfachte Seitenansicht eines alternativen Ausführungsbeispiels des Bauelementekörpers der Fig. 2, wobei die Hauptsäulen um einen verdeckheckseitigen Drehpunkt gegenüber den weiteren Bauelementen des Bauelementekörpers verschwenkbar sind;
- Fig. 6: eine vereinfachte Seitenansicht eines alternativen Ausführungsbeispiels des Bauelementekörpers der Fig. 2, wobei die Hauptsäulen über einen Viergelenkmechanismus gegenüber den weiteren Bauelementen des Bauelementekörpers verlagerbar sind;
- Fig. 7: eine vereinfachte Seitenansicht eines alternativen Ausführungsbeispiels des Bauelementekörpers der Fig. 2, wobei die Hauptsäulen über eine Kulissenführung gegenüber den weiteren Bauelementen des Bauelementekörpers verlagerbar sind; und
- Fig. 8: eine vereinfachte Seitenansicht eines alternativen Ausführungsbeispiels des Bauelementekörpers der Fig. 2, wobei die Hauptsäulen zusammen mit dem Eckspriegel eine Einheit bilden, welche mittels eines Viergelenkmechanismus gegenüber den weiteren Bauelementen des Bauelementekörpers verlagerbar ist.

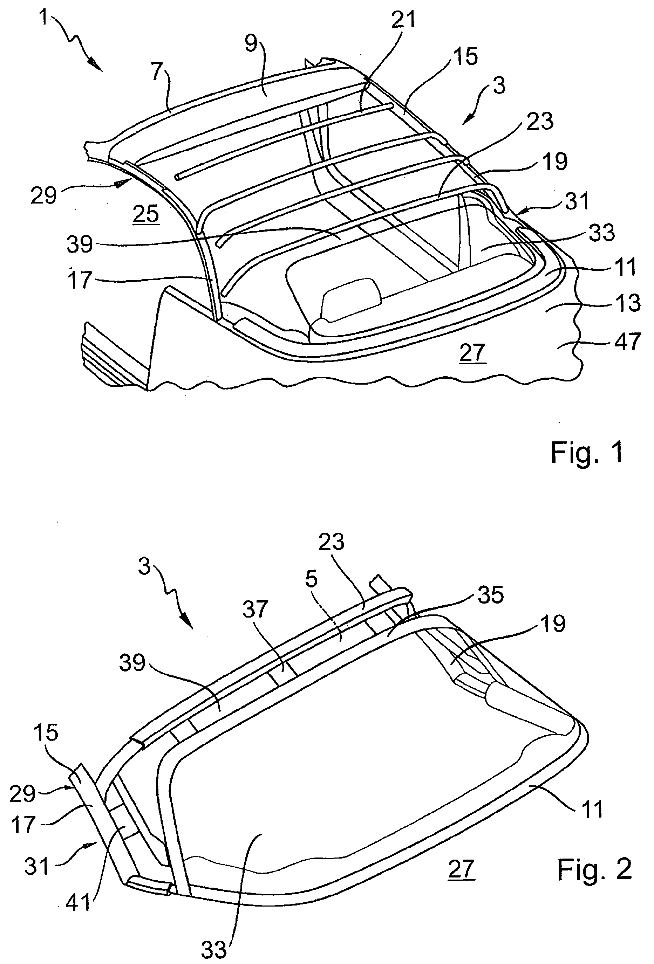

In Fig. 1 ist stark schematisiert ein Ausschnitt eines Cabriolet-Fahrzeugs 1 mit einem als Soft-Top ausgebildeten Verdeck 3 gezeigt, wobei das Verdeck 3 ohne einen das Verdeck 3 überspannenden flexiblen Verdeckbezug 5 dargestellt ist. Der Verdeckbezug 5 erstreckt sich bei geschlossenem Verdeck 3 von einer an einem Windschutzscheibenrahmen 7 angeordneten Dachspitze 9 bis zu einem Stoffhaltebügel 11, welcher in einem Bereich eines heckseitigen Deckels 13 angeordnet ist.

Seitlich wird das Verdeck 3 von seitlichen Dachrahmenelementen 15 begrenzt, welche bei geschlossenem Verdeck 3 fluchtend verdeckfrontseitig an eine einer linken Fahrzeugseite angeordneten C-Säule bzw. Hauptsäule 17 und eine einer rechten Fahrzeugseite angeordneten Hauptsäule 19 des Verdecks 3 anschließen. In Verdeckquerrichtung sind die seitlichen Dachrahmenelemente 15 und die ebenfalls Dachrahmenelemente darstellenden Hauptsäulen 17, 19 über Querspriegel 21 verbunden, wobei ein bei geschlossenem Verdeck 3 hinterster Querspriegel als Eckspriegel 23 bezeichnet wird.

Das Verdeck 3 kann ausgehend von der gezeigten, einen Fahrgastraum 25 überdeckenden, geschlossenen Position mittels einer nicht näher dargestellten, mit einem Verdeckgestänge 29 zusammenwirkenden Antriebseinrichtung in eine den Fahrgastraum 25 freigebende, offene Position verlagert werden, in welcher das Verdeck 3 in einem heckseitigen Ablageraum 27 verstaut ist. Der heckseitige Ablageraum 27 ist vorliegend von dem heckseitigen Deckel 13 verschließbar.

Ein heckseitiger Teil des Verdecks 3 bildet dabei einen in der Fig. 2 ersichtlichen Bauelementekörper 31, welcher als Bauelemente die Hauptsäulen 17, 19, den Eckspriegel 23, den Stoffhaltebügel 11 und eine Heckscheibe 33 aufweist. Der Bauelementekörper 31 wird dabei von Ebenen begrenzt, die von dem Eckspriegel 23, dem Stoffhaltebügel 11, der Heckscheibe 33 aufgespannt werden. Weiterhin begrenzt eine von den beiden Hauptsäulen 17, 19 aufgespannte Ebene den Bauelementekörper 31.

Die Heckscheibe 33 ist über einen Heckscheibenrahmen 35 mit dem Bauelementekörper 31 verbunden, wobei der Heckscheibenrahmen 35 in einem von dem flexiblen Verdeckbezug 5 überspannten Bereich 39 vorliegend zusätzlich über Verbindungsstreben 37 mit dem Eckspriegel 23 verbunden ist.

Weiterhin ist eine Einlage 41 vorgesehen, welche mit dem Eckspriegel 23 und der Hauptsäule 17 zusammenwirkt.

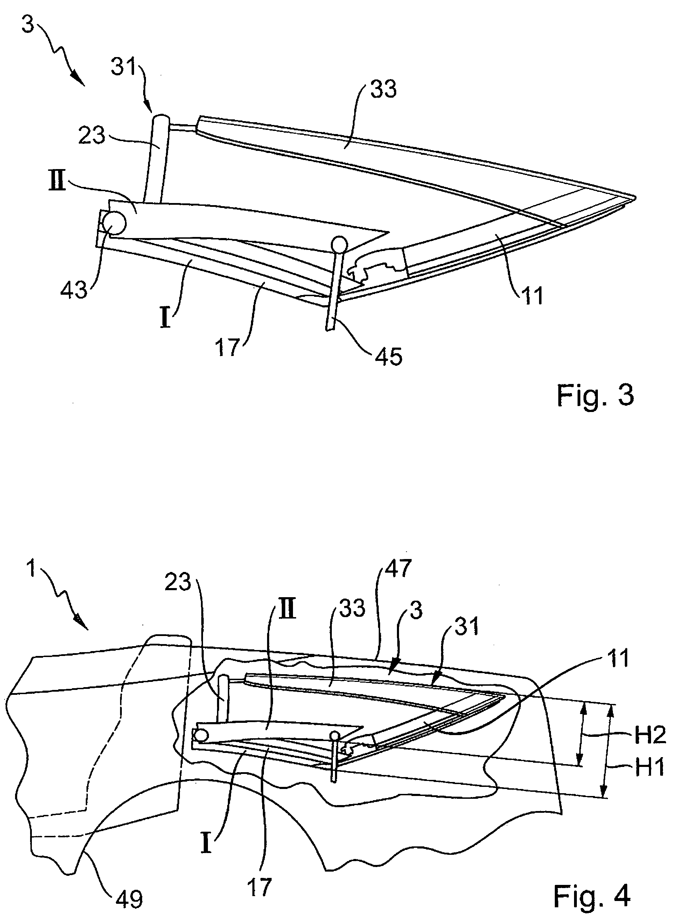

In der Fig. 3 ist der Bauelementekörper 31 in einer vereinfachten seitlichen Ansicht in Alleinstellung gezeigt, wobei schematisch eine starre Anbindung der Heckscheibe 33 an den Eckspriegel 23 dargestellt ist, welche vorliegend durch die Verbindungsstreben 37 realisiert ist. Weiterhin ist die Heckscheibe 33 starr mit dem Stoffhaltebügel 11 verbunden.

Die Hauptsäulen 17, 19, von denen in der Fig. 3 nur die der linken Fahrzeugseite zugeordnete Hauptsäule 17 ersichtlich ist, bilden dabei eine gegenüber den anderen Bauelementen 11, 23, 33 verschwenkbare Einheit und sind über einen in einem verdeckfrontseitigen Bereich der Hauptsäule 17 angeordneten Drehpunkt 43 rotatorisch gegenüber den anderen Bauelementen 11, 23, 33 von einer ersten Position I bei geschlossenem Verdeck 3 in eine zweite, gestrichelt dargestellte Position II bei offenem Verdeck 3 innerhalb von Bewegungsgrenzen, welche durch das Maß des Verdeckbezugs 5 vorgegeben sind, bewegbar.

Die Hauptsäulen 17, 19 sind vorliegend an einem nicht näher dargestellten Lenker des Verdeckgestänges 29 drehbar gelagert und über eine in einem heckseitigen Bereich der Hauptsäulen 17, 19 angreifende, als Zug-Druckstange 45 ausgebildete und nur schematisch dargestellte Antriebsstange zwangsgesteuert an das Verdeckgestänge 29 angebunden, so dass sie bei einer Verdecköffnungs- oder schließbewegung über die Verdeckkinematik mitbewegt werden.

Bei einer Überführung des Verdecks 3 zwischen seiner geschlossenen Position und seiner offenen Position bleibt der Bauelementekörper 31 bestehen, d. h. die Bauelemente 11, 17, 19, 23, 33 werden nicht gegensinnig zueinander bewegt. Im Prinzip behalten die Bauelemente 11, 23, 33 des Bauelementekörpers 31 ihre relative Position zueinander bei, nur die Hauptsäulen 17, 19 werden bei einer Verdecköffnungs- bzw. schließbewegung gegenüber den restlichen Bauelementen 11, 23, 33 verschwenkt. Der Bauelementekörper 31 behält somit mit Ausnahme der Hauptsäulen 17, 19 seine Form bei.

Die gesamte Verlagerung des Bauelementekörpers 31 als Einheit ermöglicht einen vorteilhafterweise einfachen Verdeckmechanismus. Der Bauelementekörper 31 kann über einen Viergelenkmechanismus an einem nicht näher ersichtlichen Hauptlager des Verdecks 3 angelenkt sein und wahlweise als unterstes oder oberstes Bauteil des Verdecks 3 in dem heckseitigen Ablageraum 27 positioniert werden. Bei einer Verdecköffnungsbewegung wird der Bauelementekörper 31 im Wesentlichen parallel heckwärts abwärts verlagert, ohne ein nennenswertes Verkippen um eine Fahrzeugquerachse durchzuführen.

Die Hauptsäulen 17, 19 stehen bei geschlossenem Verdeck 3 optisch vorteilhaft wenigstens annähernd parallel zu der Heckscheibe 33, wodurch sich eine C-Säulenoptik ergibt, die einem Coupe oder einem Cabriolet-Fahrzeug mit Hard-Top-Verdeck entspricht. Die Hauptsäulen 17, 19 können dadurch für ein gute Sicht nach schräg hinten sehr schmal und coupéartig und die Heckscheibe 33 vorteilhafterweise groß ausgebildet sein.

Die Heckscheibe 33 wird gleichsinnig zu den Hauptsäulen 17, 19 abgelegt, nämlich wenigstens annähernd horizontal und mit ihrer bei geschlossenem Verdeck 3 dem Fahrgastraum 25 zugewandten Seite nach unten zeigend. Das Verdeck 3 ist dadurch im abgelegten Zustand besonders flach.

Die bei geschlossenem Verdeck 3 fahrzeugfrontseitig der Hauptsäulen 17, 19 angeordneten seitlichen Dachrahmenelemente 15 können über einen Viergelenkmechanismus an den Bauelementekörper 31 angebunden sein, so dass sie bei Beginn einer Dachöffnungsbewegung heckwärts und abwärts unter die Hauptsäulen 17, 19 verlagert werden.

Bei mehrteiligen vor den Hauptsäulen angeordneten seitlichen Dachrahmenelementen können diese alternativ hierzu über eine jeweils drehbare Lagerung Z-artig unter den Bauelementekörper verlagert werden.

In einer weiteren Alternative können die seitlichen Dachrahmenelemente über Viergelenkmechanismen miteinander verbunden sein und direkt über einen Viergelenkmechanismus an das Hauptlager angebunden sein, wobei die seitlichen Dachrahmenelemente bei einer Verdecköffnung unter den an die seitlichen Dachrahmenelemente angebundenen Bauelementekörper verlagert werden. Selbstverständlich können weitere Verdeckmechanismen eingesetzt werden.

In der Fig. 4 ist der Bauelementekörper 31 in dem nur schematisch dargestellten und von einer Karosserieaußenhaut 47 sowie einem Radhaus 49 inklusive einer nicht näher dargestellten Betankungsanlage begrenzten heckseitigen Ablageraum 27 bei offenem Verdeck 3 dargestellt, in welchen der Bauelementekörper 31 zusammen mit den restlichen Verdeckelementen bei einer Verdecköffnungsbewegung von der Verdeckkinematik verlagert wird. Erst durch die Verschwenkung der Hauptsäulen 17, 19 um den Drehpunkt 43 von der ersten Position I in die zweite Position II ist die Anordnung des Bauelementekörpers 31 in dem heckseitigen Ablageraum 27 aufgrund des klein ausgebildeten Ablageraums 27 möglich, da eine von dem Bauelementekörper 31 eingenommene Höhe durch die Verschwenkung der Hauptsäulen 17, 19 von seiner ersten Position in seine zweite Position von einer Höhe H1 auf eine Höhe H2 verringert wird.

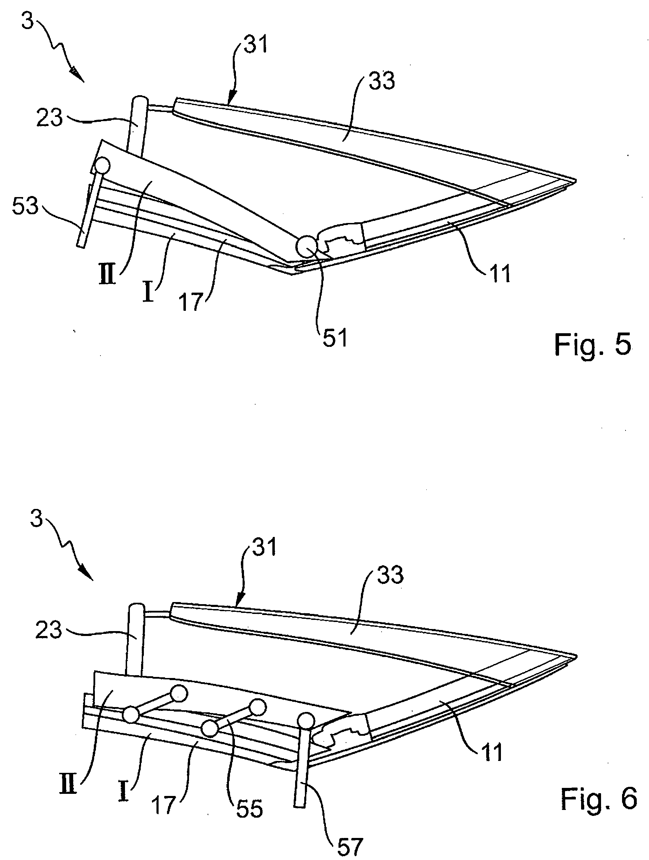

Bei einer in der Fig. 5 gezeigten alternativen Ausgestaltung der Erfindung sind die Hauptsäulen 17, 19 in einem verdeckheckseitigen hinteren Bereich drehbar gegenüber den anderen starr miteinander verbundenen Bauelementen 11, 23, 33 des Bauelementekörpers 31 gelagert. Die Hauptsäulen 17, 19 sind dabei über einen Drehpunkt 51 drehbar an dem Stoffhaltebügel 11 angelenkt, können bei einer alternativen Ausgestaltung der Erfindung aber auch an einem Lenker des Verdeckgestänges 29 angelenkt sein. Bei einer Überführung des Verdecks 3 zwischen seiner geschlossenen Position und seiner offenen Position sind die Hauptsäulen 17, 19 analog zu dem oben beschriebenen Ausführungsbeispiel zwischen der ersten Position I bei geschlossenem Verdeck 3 und der zweiten Position II bei offenem Verdeck 3 verlagerbar.

Zur Bewegung der Hauptsäulen 17, 19 gegenüber dem Bauelementekörper 31 sind die Hauptsäulen 17, 19 in einem verdeckfrontseitigen Bereich über eine schematisch dargestellte, als Zug-Druckstange 53 ausgebildete Antriebsstange zwangsgesteuert an das Verdeckgestänge 29 angebunden.

Fig. 6 zeigt eine weitere alternative Ausgestaltung der Erfindung, bei der die Hauptsäulen 17, 19 über einen schematisch dargestellten, als Viergelenkscharnier 55 ausgebildeten Viergelenkmechanismus zwischen der ersten Position I bei geschlossenem Verdeck 3 und der zweiten Position II bei offenem Verdeck 3 verlagerbar sind. Das Viergelenkscharnier 55 verbindet dabei die Hauptsäulen 17, 19 mit einem nicht ersichtlichen Lenker des Verdeckgestänges 29, wobei die Hauptsäulen über eine als Zug-Druckstange 57 ausgebildete und in einem verdeckfrontseitigen Bereich an den Hauptsäulen 17, 19 angeordnete Antriebsstange bei einer Verdeckbewegung über die Verdeckkinematik zwangsgesteuert werden.

Auch hier wird durch die Bewegung der Hauptsäulen 17, 19 von der ersten Position I in die zweite Position II ein von dem Bauelementekörper 31 benötigter Ablageraum an den heckseitigen Ablageraum 27 angepasst und die Höhe des Bauelementekörpers 31 reduziert.

Die Hauptsäulen 17, 19 sind in einer weiteren alternativen Ausgestaltung der Erfindung mittels einer schematisch dargestellten Kulissenführung 59 gegenüber den weiteren Bauelementen 11, 23, 33 des Bauelementekörpers 31 beweglich gelagert. Dabei sind insbesondere zwei linear ausgebildete Kulissenbahnen 61, 63 vorgesehen, welche vorliegend an einem Lenker des Verdeckgestänges 29 angeordnet sind und in welchen die Hauptsäulen 17, 19 gelagert sind. Eine erste Kulissenbahn 61 ist dabei in einem verdeckfrontseitigen Bereich der Hauptsäulen 17, 19 und eine zweite Kulissenbahn 63 in einem verdeckheckseitigen Bereich der Hauptsäulen 17, 19 angeordnet.

Zur translatorischen Bewegung der Hauptsäulen 17, 19 zwischen der ersten Position I bei geschlossenem Verdeck 3 und der zweiten Position II bei offenem Verdeck 3 sind die Hauptsäulen 17, 19 über eine nur schematisch dargestellte und als Zug-Druckstange 65 ausgebildete Antriebsstange an das Verdeckgestänge 29 zwangsgesteuert angebunden, wobei die Zug-Druckstange 65 vorliegend in einem mittigen Bereich der Hauptsäulen 17, 19 mit diesen zusammenwirkt.

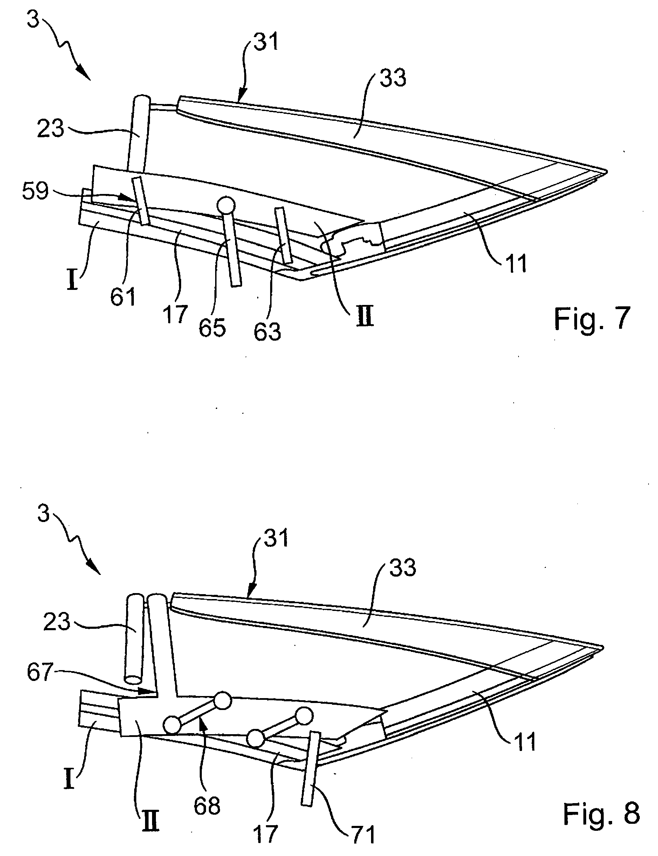

Um den Bauelementekörper 31 bei einer Verdecköffnungsbewegung in seiner Länge zu verkürzen, bilden bei der in der Fig. 8 dargestellten Ausgestaltung der Erfindung die Hauptsäulen 17, 19 zusammen mit dem Eckspriegel 23 eine gegenüber den anderen Bauelementen 11, 33 bewegliche starre Einheit 67. Die Einheit 67 ist dabei über einen als Viergelenkscharnier 69 ausgebildeten Viergelenkmechanismus von einer ersten Position I bei geschlossenem Verdeck 3 in eine gegenüber dieser nach hinten verschwenkte zweite Position II bewegbar, wobei hierdurch eine Gesamtlänge des Bauelementekörpers 31 verkürzt wird und dieser auch bei kurz ausgebildeten heckseitigen Ablageräumen 27 eingesetzt werden kann. Das einenends mit den Hauptlagern 17, 19 und andernends mit einem Lenker des Verdeckgestänges 29 verbundene Viergelenkscharnier 69 ist über eine nur schematisch angedeutete und als Zug-Druckstange 71 ausgebildete Antriebsstange zwangsgesteuert an eine Verdeckkinematik angebunden.

Auch bei dieser Ausgestaltung sind jeweils zwei Bauelemente des Bauelementekörpers 31 starr miteinander verbunden, nämlich einerseits wie bei den vorherigen Ausführungsbeispielen die Heckscheibe 33 mit dem Stoffhaltebügel 11 und andererseits die Hauptsäulen 17, 19 mit dem Eckspriegel 23.

## Patentansprüche

1. Soft-Top-Verdeck für ein Cabriolet-Fahrzeug (1), welches zwischen einer einen Fahrgastraum (25) überdeckenden, geschlossenen Position und einer den Fahrgastraum (25) freigebenden, offenen Position verfahrbar ist, aufweisend einen wenigstens bereichsweise von einem flexiblen Verdeckbezug (5) bezogenen Bauelementekörper (31), welcher als Bauelemente eine Heckscheibe (33), einen Stoffhaltebügel (11), einen Eckspriegel (23) und Hauptsäulen (17, 19) umfasst, wobei die Orientierung der Bauelemente (11, 17, 19, 23, 33, 67) des Bauelementekörpers (31) zueinander bei einer Überführung des Verdecks (3) zwischen der geschlossenen Position und der offenen Position bestehen bleibt, wobei die Heckscheibe (33) starr mit dem Stoffhaltebügel (11) und starr mit dem Eckspriegel (23) verbunden ist, und wobei eine aus wenigstens einem Bauelement (17, 19, 67) des Bauelementekörpers (31) bestehende Einheit (17, 19, 67) bei einer Überführung des Verdecks (3) zwischen der geschlossenen Position und der offenen Position gegenüber den anderen Bauelementen des Bauelementekörpers (31) innerhalb von Bewegungsgrenzen, welche durch den Verdeckbezug (5) vorgegeben sind, bewegbar ist,
**dadurch gekennzeichnet,**
**dass** die Hauptsäulen (17, 19) die Einheit darstellen.

2. Soft-Top-Verdeck für ein Cabriolet-Fahrzeug (1), welches zwischen einer einen Fahrgastraum (25) überdeckenden, geschlossenen Position und einer den Fahrgastraum (25) freigebenden, offenen Position verfahrbar ist, aufweisend einen wenigstens bereichsweise von einem flexiblen Verdeckbezug (5) bezogenen Bauelementekörper (31), welcher als Bauelemente eine Heckscheibe (33), einen Stoffhaltebügel (11), einen Eckspriegel (23) und Hauptsäulen (17, 19) umfasst, wobei die Orientierung der Bauelemente (11, 17, 19, 23, 33, 67) des Bauelementekörpers (31) zueinander bei einer Überführung des Verdecks (3) zwischen der geschlossenen Position und der offenen Position bestehen bleibt, wobei die Heckscheibe (33) starr mit dem Stoffhaltebügel (11) verbunden ist, und wobei eine aus wenigstens einem Bauelement (17, 19, 67) des Bauelementekörpers (31) bestehende Einheit (17, 19, 67) bei einer Überführung des Verdecks (3) zwischen der geschlossenen Position und der offenen Position gegenüber den anderen Bauelementen des Bauelementekörpers (31) innerhalb von Bewegungsgrenzen, welche durch den Verdeckbezug (5) vorgegeben sind, bewegbar ist,
**dadurch gekennzeichnet,**
**dass** die Hauptsäulen (17, 19) und der Eckspriegel (23) die Einheit (67) darstellen, wobei die Hauptsäulen (17, 19) und der Eckspriegel (23) starr miteinander verbunden sind.

3. Soft-Top-Verdeck nach Anspruch 1 oder 2,
**dadurch gekennzeichnet,**
**dass** die Einheit (17, 19, 67) rotatorisch gegenüber den anderen Bauelementen bewegbar ist.

4. Soft-Top-Verdeck nach Anspruch 1 oder 2,
**dadurch gekennzeichnet,**
**dass** die Einheit (17, 19, 67) translatorisch gegenüber den anderen Bauelementen bewegbar ist.

5. Soft-Top-Verdeck nach Anspruch 1 oder 2,
**dadurch gekennzeichnet,**
**dass** die Einheit (17, 19, 67) durch eine kombinierte rotatorische und translatorische Bewegung gegenüber den anderen Bauelementen bewegbar ist.

6. Soft-Top-Verdeck nach einem der Ansprüche 1 bis 5,
**dadurch gekennzeichnet,**
**dass** die Einheit (17, 19, 67) bei einer Überführung des Verdecks (3) zwischen seiner geschlossenen Position und seiner offenen Position durch eine Anbindung an ein Verdeckgestänge (29) zwangsgesteuert ist.

7. Soft-Top-Verdeck nach einem der Ansprüche 1 bis 5,
**dadurch gekennzeichnet,**
**dass** ein separater Antrieb zur Bewegung der Einheit (17, 19, 67) vorgesehen ist.

8. Soft-Top-Verdeck nach einem der Ansprüche 1 bis 7,
**dadurch gekennzeichnet,**
**dass** mehrere bewegliche Einheiten (17, 19, 67) vorgesehen sind.

9. Soft-Top-Verdeck nach einem der Ansprüche 1 bis 8,
**dadurch gekennzeichnet,**
**dass** wenigstens zwei Bauelemente des Bauelementekörpers (31) starr miteinander verbunden sind.

## Claims

1. A soft top hood for a convertible vehicle (1), said hood being displaceable between a closed position covering a passenger compartment (25) and an open position uncovering said passenger compartment (25), and said hood comprising a component body (31), which is at least partly covered by a flexible hood cover (5) and whose components include a rear window (33), a fabric-holding bracket (11), a corner bow (23) and main pillars (17, 19), the orientation of the components (11, 17, 19, 23, 33, 67) of the component body (31) with respect to each other being maintained when transferring the hood (3) between the closed and open positions, said rear window (33) being rigidly connected to the fabric-holding bracket (11) and rigidly connected to the corner bow (23), and a unit (17, 19, 67) consisting of at least one component (17, 19, 67) of the component body (31) being movable with respect to the other components of the component body (31) within limits defined by the hood cover (5), when transferring the hood (3) between the closed and open positions, **characterised in that** the main pillars (17, 19) form said unit.

2. A soft top hood for a convertible vehicle (1), said hood being displaceable between a closed position covering a passenger compartment (25) and an open position uncovering said passenger compartment (25), and said hood comprising a component body (31), which is at least partly covered by a flexible hood cover (5) and whose components include a rear window (33), a fabric-holding bracket (11), a corner bow (23) and main pillars (17, 19), the orientation of the components (11, 17, 19, 23, 33, 67) of the component body (31) with respect to each other being maintained when moving the hood (3) between the closed and open positions, said rear window (33) being rigidly connected to the fabric-holding bracket (11), and a unit (17, 19, 67) consisting of at least one component (17, 19, 67) of the component body (31) being movable with respect to the other components of the component body (31) within limits defined by the hood cover (5), when transferring the hood (3) between the closed and open positions, **characterised in that** the main pillars (17, 19) and the corner bow (23) form the unit (67), said main pillars (17, 19) and said corner bow (23) being rigidly connected to each other.

3. The soft top hood according to claim 1 or 2, **characterised in that** the unit (17, 19, 67) is movable in a rotary motion with respect to the other components.

4. The soft top hood according to claim 1 or 2, **characterised in that** the unit (17, 19, 67) is movable in a translational motion with respect to the other components.

5. The soft top hood according to claim 1 or 2, **characterised in that** the unit (17, 19, 67) is movable in a combined rotary and translational motion with respect to the other components.

6. The soft top hood according to any one of claims 1 to 5, **characterised in that**, when transferring the hood (3) between its closed position and its open position, the unit (17, 19, 67) is force-controlled by its connection to a hood linkage (29).

7. The soft top hood according to any one of claims 1 to 5, **characterised in that** a separate drive is provided for moving the unit (17, 19, 67).

8. The soft top hood according to any one of claims 1 to 7, **characterised in that** a plurality of movable units (17, 19, 67) is provided.

9. The soft top hood according to any one of claims 1 to 8, **characterised in that** at least two components of the component body (31) are rigidly connected to each other.

## Revendications

1. Capote pour un véhicule cabriolet (1), ladite capote étant déplaçable entre une position fermée couvrant un habitacle (25) et une position ouverte exposant ledit habitacle (25), et ladite capote comportant un ensemble de composants (31) qui est au moins partiellement couvert par un recouvrement de capote flexible (5) et qui comporte comme composants une lunette arrière (33), un étrier de retenue du tissu (11), un arceau de coin (23) et des colonnes principales (17, 19), l'orientation desdits composants (11, 17, 19, 23, 33, 67) de l'ensemble de composants (31) entre eux étant maintenue lors d'un déplacement de la capote (3) entre la position fermée et la position ouverte, ladite lunette arrière (33) étant reliée de manière rigide audit étrier de retenue du tissu (11) et audit arceau de coin (23), et une unité (17, 19, 67) constituée par au moins un composant (17, 19, 67) de l'ensemble de composants (31) étant déplaçable par rapport aux autres composants de l'ensemble de composants (31) dans des limites définies par ledit recouvrement de capote (5) lors d'un déplacement de la capote (3) entre la position fermée et la position ouverte, ladite capote étant **caractérisée en ce que** les colonnes principales (17, 19) constituent ladite unité.

2. Capote pour un véhicule cabriolet (1), ladite capote étant déplaçable entre une position fermée couvrant un habitacle (25) et une position ouverte exposant ledit habitacle (25), et ladite capote comportant un ensemble de composants (31) qui est au moins partiellement couvert par un recouvrement de capote flexible (5) et qui comporte comme composants une lunette arrière (33), un étrier de retenue du tissu (11), un arceau de coin (23) et des colonnes principales (17, 19), l'orientation desdits composants (11, 17, 19, 23, 33, 67) de l'ensemble de composants (31) entre eux étant maintenue lors d'un déplacement de la capote (3) entre la position fermée et la position ouverte, ladite lunette arrière (33) étant reliée de manière rigide audit étrier de retenue du tissu (11), et une unité (17, 19, 67) constituée par au moins un composant (17, 19, 67) de l'ensemble de composants (31) étant déplaçable par rapport aux autres composants de l'ensemble de composants (31) dans des limites définies par ledit recouvrement de capote (5) lors d'un déplacement de la capote (3) entre la position fermée et la position ouverte, ladite capote étant **caractérisée en ce que** les colonnes principales (17, 19) et ledit arceau de coin (23) constituent ladite unité (67), lesdites colonnes principales (17, 19) et ledit arceau de coin (23) étant reliés entre eux de manière rigide.

3. Capote selon la revendication 1 ou 2, **caractérisée en ce que** l'unité (17, 19, 67) est mobile en rotation par rapport aux autre composants.

4. Capote selon la revendication 1 ou 2, **caractérisée en ce que** l'unité (17, 19, 67) est mobile en translation par rapport aux autre composants.

5. Capote selon la revendication 1 ou 2, **caractérisée en ce que** l'unité (17, 19, 67) est mobile par combinaison d'un mouvement rotatif et un mouvement translatoire par rapport aux autre composants.

6. Capote selon l'une quelconque des revendications 1 à 5, **caractérisée en ce que**, lors d'un déplacement de la capote (3) entre sa position fermée et sa position ouverte, l'unité (17, 19, 67) est commandé automatiquement par liaison à une tringlerie de capote (29).

7. Capote selon l'une quelconque des revendications 1 à 5, **caractérisée en ce que** l'on prévoit un entraînement séparé pour le déplacement de l'unité (17, 19, 67).

8. Capote selon l'une quelconque des revendications 1 à 7, **caractérisé en ce que** l'on prévoit plusieurs unités mobiles (17, 19, 67).

9. Capote selon l'une quelconque des revendications 1 à 8, **caractérisée en ce qu'**au moins deux composants de l'ensemble de composants (31) sont reliés entre eux de manière rigide.
